# EUROPÄISCHE PATENTSCHRIFT

(11) **EP 0 547 400 B1**
(45) Veröffentlichungstag und Bekanntmachung des Hinweises auf die Patenterteilung: **20.09.1995**
(21) Anmeldenummer: 92119851.1
(22) Anmeldetag: 21.11.1992
(51) Int. Cl.: B01D 53/14, B01D 53/34

(54) **Verfahren zur Entfernung von H2S aus Gasen**
Process for removing H2S from gases
Procédé d'élimination de H2S des gaz

(30) Priorität: 19.12.1991 DE 4142015
(43) Veröffentlichungstag der Anmeldung: 23.06.1993
(73) Patentinhaber: Krupp Koppers GmbH, 45143 Essen (DE)
(72) Erfinder: Deuser, Norbert, W-4300 Essen 1 (DE); Diemer, Peter, Dr., W-4300 Essen 1 (DE); Gross, Manfred, Dr., W-4390 Gladbeck (DE); Seyfferth, Wilfried, W-4300 Essen 1 (DE)

(56) Entgegenhaltungen:
- EP-A- 0 090 127
- EP-A- 0 363 664
- DE-A- 3 215 333
- US-A- 4 138 230

## Beschreibung

Die Erfindung betrifft ein Verfahren zur Entfernung von H₂S aus Gasen mittels einer Pottaschelösung mit Regeneration der beladenen Pottaschelösung.

Die Verwendung von wässrigen Pottaschelösungen zur Entfernung von H₂S aus Gasen durch chemische Umsetzung der Reaktionspartner ist bereits seit langer Zeit bekannt. Die vorliegende Erfindung betrifft einen speziellen Anwendungsfall für dieses Verfahren, bei dem in einer Betriebsanlage Niederdruck- und/oder Hochdruckgas entschwefelt werden müssen und bezüglich des Entschwefelungsgrades des Niederdruck- und des Hochdruckgases unterschiedliche Anforderungen gestellt werden.

Ein derartiger Anwendungsfall ist beispielsweise dann gegeben, wenn in einer Kokerei ein Teil des erzeugten Koksofengases als Niederdruckgas für die Unterfeuerung der Verkokungsöfen verwendet werden soll, während die Hauptmenge des erzeugten Koksofengases als Hochdruckgas in ein Gasversorgungsnetz eingespeist und einer anderen Verwendung zugeführt werden soll. Hierbei wird normalerweise die Entschwefelung sowohl von Niederdruck- als auch von Hochdruckgas gleichzeitig durchgeführt. Es sind aber auch Anwendungsfälle möglich, bei denen in einer Betriebsanlage auf Grund bestimmter Betriebsbedingungen zumindestens zeitweise nur die alleinige Behandlung von Niederdruck- oder von Hochdruckgas erfolgen soll.

In der DE-A 3 215 333 wird vorgeschlagen, eine in einem Drucksystem partiell angereicherte Waschlösung zur weiteren Anreicherung im Normaldrucksystem einzusetzen und danach zu regenerieren. Der Nachteil besteht darin, daß durch die Verwendung eines vorbeladenen Waschmittels zur H₂S-Entfernung im Normalbereich und durch Verwendung eines Waschmittels mit einheitlicher Waschmittelkonzentration die Wirtschaftlichkeit des Prozeßes nachteilig beeinflußt ist.

Der Erfindung liegt deshalb die Aufgabe zugrunde, die Pottaschewäsche so auszugestalten, daß sie den speziellen Anforderungen derartiger Anwendungsfälle gerecht wird.

Dabei sollen die Verfahrensbedingungen nach Möglichkeit gleichzeitig so gewählt werden, daß eine sinnvolle Verknüpfung mit anderen Verfahrensschritten des Betriebsablaufes möglich und eine optimale Wirtschaftlichkeit des Verfahrens gewährleistet ist.

Das der Lösung dieser Aufgabe dienende Verfahren ist erfindungsgemäß dadurch gekennzeichnet, daß für die H₂S-Entfernung aus Nieder- und/oder Hochdruckgas Pottaschelösungen mit unterschiedlichem Regenerationsgrad verwendet werden, deren Pottaschegehalt im Bereich zwischen 60 und 120 g/l K₂CO₃ gehalten wird, wobei die Entschwefelung des Niederdruckgases im Druckbereich von 0,9 bis 1,2 bar zweistufig mittels unterschiedlich stark regenerierter Pottaschelösungen bis auf einen H₂S-Restgehalt von 0,1 bis 0,5 g H₂S/m³ Gas und die Entschwefelung des Hochdruckgases im Druckbereich von 2 bis 25 bar mit Pottaschelösung und Natronlauge bis auf einen H₂S-Restgehalt von < 2 mg H₂S/m³ Gas erfolgt und wobei die beladenen Pottaschelösungen aus der Niederdruck- und/oder der Hochdruckwäsche einer Regeneration bei einer Temperatur von 55° C bis 65° C und einem Druck von 0.1 bis 0.3 bar, vorzugsweise 60° C und 0.2 bar, unterworfen werden und im Falle der gleichzeitigen Reinigung von Nieder- und Hochdruckgas beide anfallenden beladenen Pottaschelösungen gemeinsam regeneriert werden.

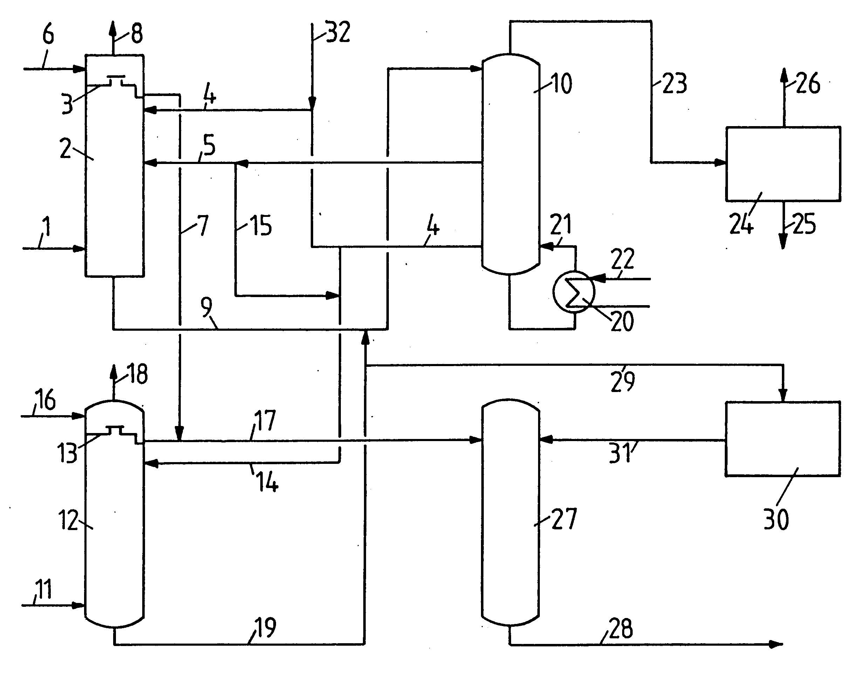

Weitere Einzelheiten des erfindungsgemäßen Verfahrens ergeben sich aus den vorliegenden abhängigen Ansprüchen und sollen nachfolgend an Hand des in der Abbildung dargestellten Fließschemas erläutert werden. Selbstverständlich zeigt dabei das Fließschema nur die für die Verfahrenserläuterung notwendigen Anlagenteile, während Nebeneinrichtungen, wie beispielsweise Wärmetauscher, Umwälzpumpen, Meß- und Regeleinrichtungen, nicht dargestellt sind.

Das zu entschwefelnde Niederdruckgas wird mit einem Druck zwischen 0,9 und 1,2 bar über die Leitung 1 von unten in den Niederdruck-H₂S-Wascher 2 eingeleitet. Dieser Wascher kann mit geeigneten Einbauten versehen sein und weist in seinem Oberteil einen Kaminboden 3 auf. Der Niederdruck-H₂S-Wascher 2 wird in seinem Oberteil über die Leitung 4, die dicht unterhalb des Kaminbodens 3 in den Wascher mündet, mit stark regenerierter Pottaschelösung beaufschlagt, während in den mittleren Teil des Waschers über die Leitung 5 weniger stark regenerierte Pottaschelösung eingeleitet wird. Die Temperaturen der aufgegebenen Pottaschelösungen liegen dabei im Bereich zwischen 25 und 35°C. Oberhalb des Kaminbodens 3 kann zur Feinentschwefelung über die Leitung 6 Natronlauge in den Niederuck-H₂S-Wascher 2 eingeleitet werden. Die beladene Natronlauge wird anschließend ebenfalls oberhalb des Kaminbodens 3 über die Leitung 7 aus dem Wascher abgezogen. Das Niederdruckgas passiert den Wascher von unten nach oben und wird anschließend über die Leitung 8 mit einem H₂S-Restgehalt von 0,1 bis 0,5 g H₂S/ m³ seiner weiteren Verwendung zugeführt. Während der Entschwefelung im Niederdruck-H₂S-Wascher 2 wird die Gastemperatur im Bereich zwischen 20 und 40°C gehalten. Die beladene Pottaschelösung wird aus dem Sumpf des Waschers über die Leitung 9 abgezogen und anschließend über diese Leitung auf den Kopf des Regenerators 10 aufgegeben.

Die Entschwefelung des Hochdruckgases kann gleichzeitig mit der Entschwefelung des Niederdruckgases erfolgen. Hierbei wird das Hochdruckgas über die Leitung 11 mit einem Druck zwischen 2 und 25 bar von unten in den Hochdruck-H₂S-Wascher 12 eingeleitet. Auch dieser Wascher kann mit geeigneten Einbauten versehen sein, und er weist in seinem Oberteil ebenfalls einen Kaminboden 13 auf. Für die Entschwefelung des Hochdruckgases wird eine Mischung aus stark und weniger stark regenerierter Pottaschelösung verwendet, die über die Leitung 14 in den oberen Teil des Hochdruck-H₂S-Waschers 12 unterhalb des Kaminbodens 13 eingeleitet wird. Die Leitung 14 zweigt dabei von der Leitung 4 ab, durch die die stark regenerierte Pottaschelösung aus dem Sumpf des Regenerators 10 abgezogen wird. Die erforderliche, weniger stark regenerierte Pottaschelösung wird über die Leitung 15 zugeführt, die die Leitung 5 mit der Leitung 14 verbindet. Alternativ zu der im Fließschema dargestellten Ausführungsform kann die Zugabe der stark regenerierten und der weniger stark regenerierten Pottaschelösung auch an getrennten Aufgabestellen erfolgen, wobei die weniger stark regenerierte Pottaschelösung unterhalb der stark regenerierten Pottaschelösung in den Hochdruck-H₂S-Wascher 12 eingeleitet wird. Für die erforderliche Feinentschwefelung des Hochdruckgases bis auf einen H₂S-Restgehalt von weniger als 2 mg H₂S/m³ wird oberhalb des Kaminbodens 13 über die Leitung 16 Natronlauge in den Hochdruck-H₂S-Wascher 12 eingeleitet. Die beladene Natronlauge wird anschließend ebenfalls oberhalb des Kaminbodens 13 über die Leitung 17 abgezogen. In die Leitung 17 mündet dabei die vom Niedruck-H₂S-Wascher 2 kommende Leitung 7. Gemäß einer im Fließschema nicht dargestellten Ausführungsform kann die Feinentschwefelung des Hochdruckgases gegebenenfalls auch in einer separaten Kolonne erfolgen, die dem Hochdruck-H₂S-Wascher 12 nachgeschaltet ist. Die Anordnung eines Kaminbodens 13 in diesem Wascher könnte dabei entfallen. Ebenso ist es gegebenenfalls möglich, im Niederdruck-H₂S-Wascher 2 auf den Einbau des Kaminbodens 3 zu verzichten, wenn zur Erreichung des gewünschten Entschwefelungsgrades im Niederdruckgas eine Feinentschwefelung mittels Natronlauge nicht erforderlich ist oder wenn die Feinentschwefelung des Niederdruckgases in einer separaten Kolonne erfolgen soll. Das feinentschwefelte Hochdruckgas, das den Hochdruck-H₂S-Wascher 12 von unten nach oben durchströmt hat, wird über die Leitung 18 abgezogen und seiner weiteren Verwendung zugeführt. Die beladene Pottaschelösung gelangt aus dem Sumpf des Hochdruck-H₂S-Waschers 12 über die Leitung 19 zur Leitung 9, wo sie mit der vom Niederdruck H₂S-Wascher 2 kommenden, beladenen Pottaschelösung vereinigt wird.

Die zu regenerierenden Pottaschelösungen werden über die Leitung 9 auf den Kopf des Regenerators 10 aufgegeben. Der Regenerator 10, der mit einem Druck von 0,1 bis 0,3 bar betrieben wird, kann dabei mit geeigneten Einbauten versehen sein. Die für die Regeneration der Pottaschelösung benötigte Wärmemenge wird über den Reboiler 20 zugeführt, der über die Umlaufleitung 21 mit dem Regenerator 10 verbunden ist. Die Beheizung des Reboilers 20 erfolgt über die Heizschlange 22, die mit Dampf, Spülwasser aus der Kokerei oder Heißwasser beschickt wird. Je nach dem angewandten Druck liegt die Betriebstemperatur des Regenerators 10 zwischen 55 und 65°C. Aus dem mittleren Teil des Regenerators 10 wird ein Teilstrom der Pottaschelösung abgezogen und über die Leitung 5, wie weiter oben beschrieben wurde, in das Verfahren zurückgeführt. Die über die Leitung 5 abgezogene Pottaschelösung stellt die weniger stark regenerierte Pottaschelösung im Sinne der vorstehenden Verfahrensbeschreibung dar. Die stark regenerierte Pottaschelösung wird dagegen über die Leitung 4 aus dem Sumpf des Regenerators 10 abgezogen. Der erfindungsgemäße Einsatz von weniger stark regenerierter Pottaschelösung ist deshalb von Vorteil, weil für die Herstellung dieser Lösung im Regenerator 10 ein geringerer Energieaufwand erforderlich ist als für die stark regenerierte Pottaschelösung. Die am Kopf des Regenerators 10 abgezogenen H₂S-haltigen Brüden können über die Leitung 23 einer Schwefelsäure-Anlage 24 zugeführt werden, in der sie in an sich bekannter Weise zu Schwefelsäure weiterverarbeitet werden. Die anfallende Schwefelsäure wird über die Leitung 25 abgezogen, während über die Leitung 26 die Abgase dem nicht im Fließschema dargestellten Kamin zugeführt werden. Alternativ können die H₂S-haltigen Brüden natürlich auch in einer nachgeschalteten Claus-Anlage zu Elementarschwefel umgesetzt werden, wobei das anfallende Claus-Restgas dem Niederdruck- und/oder Hochdruckgas vor der Entschwefelung zugemischt werden kann.

Sofern das erfindungsgemäße Verfahren zur Entfernung von H₂S aus Koksofengas verwendet und/oder im Verbund mit einer Kokerei betrieben wird, kann die aus den beiden H₂S-Waschern stammende beladene Natronlauge über die Leitung 17 in den NH₃-Abtreiber 27 der Koksofengasbehandlung eingeleitet werden. Die beladene Natronlauge, in der bei der Gaswäsche ein wesentlicher Teil des vorhandenen NaOH zu Na₂CO₃ umgesetzt worden ist, bewirkt im NH₃-Abtreiber 27 die Zersetzung der dort vorhandenen nicht wasserdampfflüchtigen Ammoniumverbindungen. Gemäß einer bevorzugten Ausführungsform des Verfahrens sollen dabei die Bedingungen für die Pottaschewäsche in den beiden H₂S-Waschern 2 und 12 so eingestellt werden, daß die bei der Feinentschwefelung anfallende beladene Natronlauge vollständig für die Zersetzung der nicht wasserdampfflüchtigen Ammoniumverbindungen im NH₃-Abtreiber 27 genutzt werden kann und somit eine anderweitige Entsorgung von überschüssiger beladener Natronlauge nicht erforderlich ist. Um auftretende Schwankungen in den Betriebsbedingungen auszugleichen, ist es angebracht, in der Leitung 17 einen in der Abbildung nicht dargestellten Pufferbehälter für die beladene Natronlauge anzuordnen. Nach erfolgter Umsetzung der beladenen Natronlauge mit den nicht wasserdampfflüchtigen tigen Ammoniumverbindungen wird die dabei anfallende Lösung zusammen mit der aus dem NH₃-Abtreiber 27 ablaufenden Flüssigkeit über die Leitung 28 der Abwasserbehandlungsanlage der Kokerei zugeführt.

Ein anderer möglicher Verknüpfungspunkt des erfindungsgemäßen Verfahrens mit den Gasbehandlungseinrichtungen der Kokerei besteht darin, daß die aus dem Waschmittelkreislauf abzustoßende Pottaschelösung über die Leitung 29 in den Kondensatsammelbehälter 30 der Gaskühlung eingeleitet und gemeinsam mit dem Gaskondensat über die Leitung 31 auf den NH₃-Abtreiber 27 aufgegeben wird. Alternativ kann die abzustoßende Pottaschelösung auch in das in der Abbildung nicht dargestellte Spülwassersystem der Kokerei eingeleitet werden, oder die Pottaschelösung wird über die Leitung 29 unmittelbar in den NH₃-Abtreiber 27 eingeleitet. Das Spülwasser der Kokerei kann zur Beheizung des Reboilers 20 am Regenerator 10 genutzt werden.

Um in der umlaufenden Pottaschelösung den gewünschten, im Bereich zwischen 60 und 120 g/l liegenden K₂CO₃-Gehalt einhalten zu können, kann über die Leitung 32 Kalilauge in das System eingeschleust werden.

Selbstverständlich ist es in Abweichung von der Darstellung im Fließschema möglich, für die Reinigung des Niederdruck- und/oder Hochdruckgases anstelle jeweils eines H₂S-Waschers zwei oder mehr als zwei parallel geschaltete Wascher zu verwenden, wenn die zu behandelnden Gasmengen dies erforderlich machen.

Das Ausführungsbeispiel betrifft die H₂S-Entfernung aus dem in einer Kokerei erzeugten Koksofengas, wobei 25000 m³ Koksofengas pro Stunde im Niederdruckbereich bei ca. 1,2 bar bis auf 0,5 g H₂S/m³ Gas und 45000 m³ Koksofengas pro Stunde im Hochdruckbereich bei ca. 13 bar bis auf < 2 mg H₂S/m³ Gas entschwefelt werden sollen. Die Entschwefelung der beiden Gasströme erfolgte dabei in der weiter oben im Zusammenhang mit dem Fließschema erläuterten Art und Weise, wobei die Temperaturen der den bei den Waschern zugeführten Pottaschelösungen im Bereich zwischen 25 und 35°C lagen. Aus den bei den Waschern wurden insgesamt ca. 95 m³/h beladene Pottaschelösung abgezogen und in den Regenerator 10 eingeleitet. Gleichzeitig wurden aus der Feinentschwefelung mit Natronlauge ca. 5 m³/h beladene Natronlauge auf den Kopf des NH₃-Abtreibers 27 gegeben und dort zur Zersetzung der nicht wasserdampfflüchtigen Verbindungen genutzt. Ebenso wurde die aus dem Pottaschelösungskreislauf ausgeschleuste Lösungsmittelmenge in Höhe von ca. 1 m³/h auf den Kopf des NH₃-Abtreibers 27 gegeben. Die Regeneration der beladenen Pottaschelösung im Regenerator 10 erfolgte bei einem Druck von 0,2 bar und einer Temperatur von ca. 60°C, wobei die dabei anfallenden H₂S-haltigen Brüden in an sich bekannter Weise zu Schwefelsäure weiterverarbeitet wurden. In beiden Gasströmen konnte der gewünschte Entschwefelungsgrad problemlos erreicht werden. Durch die Verknüpfung des erfindungsgemäßen Verfahrens mit den Gasbehandlungseinrichtungen für das Koksofengas konnten sowohl die abgestoßene Pottaschelösung als auch die beladene Natronlauge aus der Feinentschwefelung problemlos entsorgt werden, ohne daß es hierfür besonderer Einrichtungen bedurfte.

## Patentansprüche

1. Verfahren zur Entfernung von H₂S aus Gasen mittels einer Pottaschelösung mit Regeneration der beladenen Pottaschelösung, dadurch gekennzeichnet, daß für die H₂-S-Entfernung aus Nieder- und/oder Hochdruckgas Pottaschelösungen mit unterschiedlichem Regenerationsgrad verwendet werden, deren Pottaschegehalt im Bereich zwischen 60 und 120 g/l K₂CO₃ gehalten wird, wobei die Entschwefelung des Niederdruckgases im Druckbereich von 0.9 bis 1,2 bar zweistufig mittels unterschiedlich stark regenerierter Pottaschelösungen bis auf einen H₂S-Restgehalt von 0.1 bis 0.5 g H₂S/m³ Gas und die Entschwefelung des Hochdruckgases im Druckbereich von 2 bis 25 bar mit Pottaschelösung und Natronlauge bis auf einen H₂S-Gehalt von < 2 mg H₂S/m³ Gas erfolgt, wobei die beladenen Pottaschelösungen aus der Niederdruck- und/oder der Hochdruckwäsche einer Regeneration bei einer Temperatur von 55 bis 65°C und einem Druck von 0.1 bis 0.3 bar, vorzugsweise 60° C und 0.2 bar, unterworfen werden und im Falle der gleichzeitigen Reinigung von Nieder- und Hochdruckgas beide anfallenden beladenen Pottaschelösungen gemeinsam regeneriert werden.

2. Verfahren nach Anspruch 1, **dadurch gekennzeichnet,** daß für die H₂S-Entfernung aus dem Niederdruckgas stark regenerierte Pottaschelösung in den oberen Teil und weniger stark regenerierte Pottaschelösung in den mittleren Teil des H₂S-Waschers eingeleitet wird.

3. Verfahren nach den Ansprüchen 1 und 2, **dadurch gekennzeichnet,** daß das Niederdruckgas im Anschluß an die Pottaschewäsche einer Feinentschwefelung mittels Natronlauge unterworfen wird.

4. Verfahren nach den Ansprüchen 1 bis 3, **dadurch gekennzeichnet,** daß für die H₂S-Entfernung aus dem Hochdruckgas entweder Pottaschelösung verwendet wird, die durch Mischen von stark und weniger stark regenerierter Pottaschelösung hergestellt wird, oder es wird stark regenerierte Pottaschelösung in den oberen Teil und weniger stark regenerierte Pottaschelösung in den mittleren Teil des H₂S-Waschers eingeleitet, wobei in beiden Fällen die Feinentschwefelung des Gases mittels Natronlauge im Anschluß an die Pottaschewäsche erfolgt.

5. Verfahren nach den Ansprüchen 1 bis 4, **dadurch gekennzeichnet,** daß die stark regenerierte Pottaschelösung aus dem Sumpf des Regenerators und die weniger stark regenerierte Pottaschelösung aus dem mittleren Teil des Regenerators abgezogen wird.

6. Verfahren nach den Ansprüchen 1 bis 5, **dadurch gekennzeichnet,** daß die Pottaschewäsche und die Feinentschwefelung mittels Natronlauge jeweils in einem einzigen Wascher vorgenommen werden, wobei der Bereich für die Natronlaugezugabe durch einen Kaminboden von der darunter liegenden Pottaschewäsche abgetrennt ist.

7. Verfahren nach den Ansprüchen 1 bis 6, **dadurch gekennzeichnet,** daß die beladene Natronlauge aus der Feinentschwefelung und/oder die aus dem Waschmittelkreislauf abgestoßene Pottaschelösung in den NH₃-Abtreiber einer Koksofengasbehandlungsanlage eingeleitet werden.

8. Verfahren nach dem Anspruch 7, dadurch gekennzeichnet, daß die Pottaschewäsche unter solchen Bedingungen betrieben wird, daß die bei der nachfolgenden Feinentschwefelung des Nieder- und/oder Hochdruckgases anfallende beladene Natronlauge vollständig für die Zersetzung der nicht wasserdampfflüchtigen Ammoniumverbindungen im NH₃-Abtreiber der Koksofengasbehandlungsanlage genutzt werden kann.

9. Verfahren nach den Ansprüchen 1 bis 8, **dadurch gekennzeichnet,** daß die aus dem Waschmittelkreislauf abgestoßene Pottaschelösung dem Spülwassersystem einer Kokerei zugeführt wird.

10. Verfahren nach den Ansprüchen 1 bis 9, **dadurch gekennzeichnet,** daß für die Beheizung des Regenerators Spülwasser aus der Kokerei verwendet wird.

## Claims

1. Process for removing H₂S from gases using a potash solution with regeneration of the loaded potash solution, characterised in that potash solutions with differing degrees of regeneration, the potash contents of which are kept in the range between 60 and 120 g/l of K₂CO₃, are used for removing H₂S from low-pressure and/or high-pressure gas, the desulphurisation of the low-pressure gas taking place in the pressure range from 0.9 to 1.2 bar down to a residual H₂S content of 0.1 to 0.5 g of H₂S/m³ of gas in two stages using potash solutions of varying degrees of regeneration and the desulphurisation of the high-pressure gas taking place in the pressure range from 2 to 25 bar down to an H₂S content of < 2 mg of H₂S/m³ of gas using potash solution and caustic soda solution, the loaded potash solutions from the low-pressure and high-pressure scrubbing being subjected to regeneration at a temperature of 55 to 65°C and a pressure of 0.1 to 0.3 bar, preferably 60°C and 0.2 bar, and in the case of simultaneous cleaning of low-pressure and high-pressure gas, both loaded potash solutions obtained being jointly regenerated.

2. Process according to Claim 1, characterised in that, for removing H₂S from the low-pressure gas, highly regenerated potash solution is introduced into the upper part of the H₂S scrubber and less highly regenerated potash solution is introduced into the central part.

3. Process according to Claims 1 and 2, characterised in that, following the potash scrubbing, the low-pressure gas is subjected to a fine desulphurisation using caustic soda solution.

4. Process according to Claims 1 to 3, characterised in that, for the removal of H₂S from the high-pressure gas, either potash solution is used which is produced by mixing highly and less highly regenerated potash solution, or highly regenerated potash solution is introduced into the upper part of the H₂S scrubber and less highly regenerated potash solution into the central part, in both cases the fine desulphurisation of the gas taking place using caustic soda solution following the potash scrubbing.

5. Process according to Claims 1 to 4, characterised in that the highly regenerated potash solution is with-drawn from the bottom of the regenerator and the less highly regenerated potash solution is withdrawn from the central part of the regenerator.

6. Process according to Claims 1 to 5, characterised in that the potash scrubbing and the fine desulphurisation using caustic soda solution are each carried out in a single scrubber, the region for the addition of the caustic soda solution being separated by a riser plate from the potash scrubbing below it.

7. Process according to Claims 1 to 6, characterised in that the loaded caustic soda solution from the fine desulphurisation and/or the potash solution discarded from the scrubbing agent circuit are introduced into the NH₃ stripper of a coke oven gas treatment plant.

8. Process according to Claim 7, characterised in that the potash scrubbing is operated under such conditions that the loaded caustic soda solution obtained during the subsequent fine desulphurisation of the low-pressure and/or high-pressure gas can be fully utilized in the NH₃ stripper of the coke oven gas treatment plant for the decomposition of the ammonium compounds which are not volatile in steam.

9. Process according to Claims 1 to 8, characterised in that the potash solution discarded from the scrubbing agent circuit is supplied to the flushing-water system of a coking plant.

10. Process according to Claims 1 to 9, characterised in that flushing water from the coking plant is used for heating the regenerator.

## Revendications

1. Procédé d'élimination du H₂S dans des gaz, au moyen d'une solution de potasse avec régénération de la solution de potasse chargée,
caractérisé en ce que, pour effectuer l'élimination du H₂S à partir de gaz sous faible pression et/ou sous haute pression, on utilise des solutions de potasse présentant des degrés de régénération différents, dont la teneur en potasse est maintenue dans la plage comprise entre 60 et 120 g/l de K₂CO₃, la désulfuration des gaz à basse pression se faisant dans la plage de pression allant de 0,9 à 1,2 bar, en deux étapes, au moyen de solutions de potasse dont la régénération a été poussée à des niveaux différents, jusqu'à atteindre une teneur résiduelle en H₂S 0,1 à 0,5 g de H₂S/m³ de gaz et la désulfuration des gaz à haute pression se faisant dans la plage de 2 à 25 bars, avec une solution de potasse et de la soude caustique, jusqu'à atteindre une teneur en H₂S inférieure à 2 mg de H₂S/m³ de gaz, les solutions de potasse chargées, issues du lavage à basse pression et/ou du lavage à haute pression, étant soumises à une régénération à une température de 55 à 65°C et sous une pression de 0,1 à 0,3 bar, de préférence 60°C et 0,2 bar, dans le cas d'épuration simultanée de gaz sous faible pression et sous haute pression, les deux solutions de potasse chargées produites étant régénérées conjointement.

2. Procédé selon la revendication 1,
caractérisé en ce que, pour effectuer l'élimination du H₂S à partir de gaz à faible pression, on introduit la solution de potasse fortement régénérée dans la partie supérieure et la partie de potasse faiblement régénérée dans la partie médiane du laveur de H₂S.

3. Procédé selon les revendications 1 et 2,
caractérisé en ce que le gaz basse pression est soumis à une désulfuration fine au moyen de soude caustique, à la suite du lavage à la potasse.

4. Procédé selon les revendications 1 à 3,
caractérisé en ce que, pour l'épuration du H₂S à partir de gaz haute pression, on utilise soit de la solution de potasse ayant été préparée par mélange de solution de potasse fortement régénérée et moins fortement régénérée, soit on introduit de la solution de potasse fortement régénérée dans la partie supérieure du laveur de H₂S et de la solution de potasse moins fortement régénérée dans sa partie inférieure, dans les deux cas la désulfuration fine des gaz s'effectuant à l'aide de soude caustique, après le lavage à la potasse.

5. Procédé selon les revendications 1 à 4,
caractérisé en ce que la solution de potasse fortement régénérée est extraite de la cuve inférieure du régénérateur et la solution de potasse moins fortement régénérée est extraite de la partie médiane du régénérateur.

6. Procédé selon les revendications 1 à 5,
caractérisé en ce que le lavage à la potasse et la désulfuration fine sont effectués à l'aide de soude caustique chaque fois dans un laveur unique, la zone de l'addition de soude caustique étant séparée de celle du lavage à la potasse, sous-jacente, au moyen d'un fond de cheminée.

7. Procédé selon les revendications 1 à 6,
caractérisé en ce que la soude caustique chargée issue de la désulfuration fine, et/ou la solution de potasse extraite du circuit de produit de lavage sont introduits dans le rectificateur au NH₃ d'une installation de traitement de gaz de four à coke.

8. Procédé selon la revendication 7,
caractérisé en ce que le lavage à la potasse est effectué dans des conditions telles que la soude caustique chargée produite lors de la désulfuration fine subséquente des gaz faible pression et/ou haute pression peut être utilisée en totalité pour la décomposition des combinaisons ammonium non volatiles à la vapeur d'eau dans le rectificateur NH₃ de l'installation de traitement de gaz de four à coke.

9. Procédé selon les revendications 1 à 8,
caractérisé en ce que la solution de potasse extraite du circuit de produit de lavage est amenée au système d'eau de balayage d'une cokerie.

10. Procédé selon les revendications 1 à 9,
caractérisé en ce que l'on utilise de l'eau de balayage venant de la cokerie pour le chauffage du régénérateur.
